# EUROPEAN PATENT APPLICATION

(11) **EP 1 547 673 A1**
(43) Date of publication of application: **29.06.2005**
(21) Application number: 04005842.2
(22) Date of filing: 11.03.2004
(51) Int. Cl.: B01D 71/02, C01B 3/50, B01D 53/22

(54) **Method for forming supported palladium membrane used for hydrogen purification**

(30) Priority: 19.12.2003 CN 200310123937
(71) Applicant: Rei, Min-Hon, Taipei City, 116 (TW)
(72) Inventor: Rei, Min-Hon, Taipei City 116 (TW); Chen, Chien-Kun, Banciao City Taipei Country 220 (TW); Hsu, Hsin-Chi, Zhongzheng District Keelung City 202 (TW); Hung, Chia-Yeh, Hsinchu City 300 (TW)
(74) Representative: Graf Lambsdorff, Matthias, Dr.

(57) **Abstract**

A method for forming a supported palladium membrane used for hydrogen purification and production is disclosed. The method comprises steps of providing a support, filling the support with a metal, electroless plating a palladium membrane on the support with a palladium salt solution, and DC sputtering a further palladium membrane on the support.

## Description

This invention relates to a method for forming a supported palladium membrane, and more particularly to a method for forming a supported palladium membrane used for hydrogen purification and production.

The supported membrane is made by deposition of a thin layer of metallic membrane on a porous support. The selection of the support in the early stage concentrated on the use of asymmetric ceramic. The ceramic support is generally composed of multiple layers of thin ceramic structure reducing the pore opening from bottom to top with a final layer of micro-porous surface. The basic foundation of the ceramic structure is a macro-porous layer of α-alumina, which is subsequently modified with meso-porous layers of finer particles and smaller pore openings on top of it and finally modified with micro-porous layers on the upper most layer as the finishing surface for the membrane deposition. The porous metal supported membrane was developed later because of the limited availability of fine porous metal structures. The meso-porous stainless steel support became available as the market demand of gas filtration for the submicron wafer in semiconductor industry. Most of the meso-porous stainless steel has a pore structure rated 0.2 *µ*m or 0.5 *µ*m; however, there are many large craters in the size of 20 to 50 *µ*m on the surface. These large craters make the surface deposition of membrane on it very difficult and unreliable.

In 1998, the Applicant and Prof. Y.H. Ms's group in Worcester Polytechnology Institute cooperatively published a defect free porous stainless steel supported palladium membrane made by electroless plating. Since then several publications including USP 6,152,987 have been reported in the literature. Most of these reports utilize electroless plating as a method of depositing the palladium membrane, but this technique is slow and utilizes expensive chemical of palladium salts and often requires extra post treatment for the disposal of spent waste. A few reports utilize DC sputtering; however, the binding between the palladium layer and the stainless steel layer is notoriously weak and not practical for industrial use.

Taiwan Patent Publication No. 400307 discloses a method for preparing high purity hydrogen by a supported palladium membrane assisted vapor recombination reaction. The palladium membrane preparation only utilizes the electroless plating without complete surface polishing, which results that the formed membrane is thicker, and the hydrogen purity only increases from 75% to 99.9% and the hydrogen permeability is between 1-5 M³/M²-Hr.

In JP 2002119834, Ito discloses the preparation of a 10 *µ*m Pd/Ag membrane in 77/23 ratio on a porous ceramic support by annealing separate layers of palladium and silver at 900 °C under a reducing atmosphere for 10 hours, in which the palladium layer is deposited by electroless plating on the fine ceramic support while the silver layer is deposited by eletroplating onto the palladium layer. Pinholes are reported and are repaired with silver paste to reduce helium leakage; however, the purity of hydrogen permeate is not reported with this defect repaired Pd/Ag membrane.

In JP 2002153740 of Fujimoto, the ceramic is used as the support for deposition of palladium membrane with thickness of 5 and 20 *µ*m respectively. The palladium membrane is formed by common electroless plating technique and composition, and no elaborated support preparation is reported. Although it is claimed to be leak proof with nitrogen up to 0.6MPa, there is no report on hydrogen purity of the permeate.
In JP 3288534, Yokoda discloses a preparation of a porous stainless steel (PSS) supported Pd/Ag alloy membrane without smoothing the surface of the support. The resultant membrane allows the permeation of hydrogen from a crude reaction product mixture of hydrogen and carbon dioxide (generally at 75 to 25 ratio). Unfortunately, there is no disclosure of the hydrogen purity in the permeate; hence, no information on the extent of membrane defect such as pinholes and binding strength which are common phenomena when a rough porous support is used without pretreatment.
Therefore, it is needed to provide a method for forming a supported palladium membrane which can overcome the above-mentioned disadvantages.

It is an object of the present invention to provide a method for forming a palladium membrane on a porous stainless support.
It is another object of the present invention to provide a method for forming a Pd/Ag membrane on a porous stainless support.

The membrane formation of the present invention starts from a careful preparation of the support surface by polishing and metal filling for the subsequent rapid build-up of membrane body by electroless plating or DC sputtering. The supported membrane formed by the present invention is capable of purifying industrial grade hydrogen (99.995 mol%) to semiconductor grade hydrogen (99.9999 mol%+) and from a crude mixture of 80 mol% hydrogen/20 mol% carbon dioxide to pure hydrogen of 99.98 mol%.

In accordance with an aspect of the present invention, the method for forming a supported palladium membrane used for hydrogen purification and production comprises steps of providing a support, filling the support with a metal powder, electroless plating a palladium membrane on the support with a palladium salt solution, and DC sputtering an additional palladium membrane further on the support.

Preferably, the support is a porous stainless steel support.
Preferably, the porous stainless steel support is prepared by steps of mechanically polishing the support by one of an abrasive paper and an ultrasonic vibration, electro-polishing the support, acid-washing the support with 8∼10 N HCl, and activating the support at 40∼60°C.

Preferably, the metal powder is one selected from a group consisting of palladium, niobium, tantalum and a combination thereof.

Preferably, the metal powder is a hydrogen permeable fine metal powder.

Preferably, the metal powder is mixed with one of a palladium paste and a high temperature epoxy resin.

Preferably, the method further comprises a step of polishing the support after the metal filling step.

Preferably, the polishing step is performed by an abrasive paper.

Preferably, the palladium salt solution contains 4.2∼5.4 g/L Pd(NH₃)₄Cl₂, 60∼74 g/L EDTA, 600∼700 g/L NH₄OH and 0.32∼0.4 c.c./L NH₂NH₂.

Preferably, the electroless plating is performed for 120∼360 minutes.

Preferably, the electroless plating is performed at 50∼70 °C. Preferably, a target of the DC sputtering is 99∼99.9% palladium.

Preferably, the DC sputtering is performed under a vacuum pressure of 10⁻²∼10⁻⁵ torr and a power input of 200∼500 W at 25∼250°C.

Preferably, the DC sputtering is performed for 60∼120 minutes.

Preferably, the palladium membrane has a thickness of 3∼30 *µ*m after the DC sputtering.

Preferably, the method further comprises a step of annealing the palladium membrane at 450∼550 °C under a nitrogen atmosphere including 3∼10% hydrogen for 4∼8 hours.

In accordance with another aspect of the present invention, the method for forming a supported palladium membrane used for hydrogen purification and production comprises steps of providing a support, filling the support with a metal powder, and electroless plating a palladium membrane on the support with a palladium salt solution.

In accordance with an additional aspect of the present invention, the method for forming a supported Pd/Ag membrane used for hydrogen purification and production comprises steps of providing a support, filling the support with a metal powder, electroless plating a palladium membrane on the support with a palladium salt solution, electroless plating a silver membrane on the support with a silver salt solution, annealing the palladium membrane and the silver membrane to form a Pd/Ag membrane, and DC sputtering an additional Pd/Ag membrane further on the support.

Preferably, the support is a porous stainless steel support. Preferably, the porous stainless steel support is prepared by the steps of mechanically polishing the support by one of an abrasive paper and an ultrasonic vibration, electro-polishing the support, acid-washing the support with 8∼10 N HCl, and activating the support at 40∼60°C.

Preferably, the metal powder is one selected from a group consisting of palladium, niobium, tantalum and a combination thereof.

Preferably, the metal powder is a hydrogen permeable fine metal powder.

Preferably, the metal powder is mixed with one of a palladium paste and a high temperature epoxy resin.

Preferably, the method further comprises a step of polishing the support after the metal filling step.

Preferably, the polishing step is performed by an abrasive paper.

Preferably, the palladium salt solution contains 4.2∼5.4 g/L Pd(NH₃)₄Cl₂, 60∼74 g/L EDTA, 600∼700 g/L NH₄OH and 0.32∼0.4 c.c./L NH₂NH₂.

Preferably, the silver salt solution contains 0.2∼1 g/L AgNO₃, 60∼74 g/L EDTA, 600∼700 g/L NH₄OH and 0.32∼0.4 c.c./L NH₂NH₂.

Preferably, the electroless plating is performed at 50∼70 °C. Preferably, a target of the DC sputtering is a Pd/Ag alloy with a weight composition ratio of 77/23∼60/40.

Preferably, the DC sputtering is performed under a vacuum pressure of 10⁻²∼10⁻⁵ torr and a power input of 200∼500 W at 25∼250 °C.

Preferably, the step of annealing the palladium membrane and the silver membrane is performed at 450∼550 °C under a nitrogen atmosphere including 3∼10% hydrogen for 4∼8 hours.

Preferably, the palladium membrane has a thickness of 3∼30 µm after the DC sputtering.

In accordance with a further aspect of the present invention, the method for forming a supported Pd/Ag membrane used for hydrogen purification and production, comprising steps of providing a support, filling the support with a metal powder, electroless plating a palladium membrane on the support with a palladium salt solution, electroless plating a silver membrane on the support with a silver salt solution, and annealing the palladium membrane and the silver membrane to form a Pd/Ag membrane.

The above objects and the advantages of the present invention will become more readily apparent to those ordinarily skilled in the art after reviewing the following detailed description and accompanying drawings, in which:

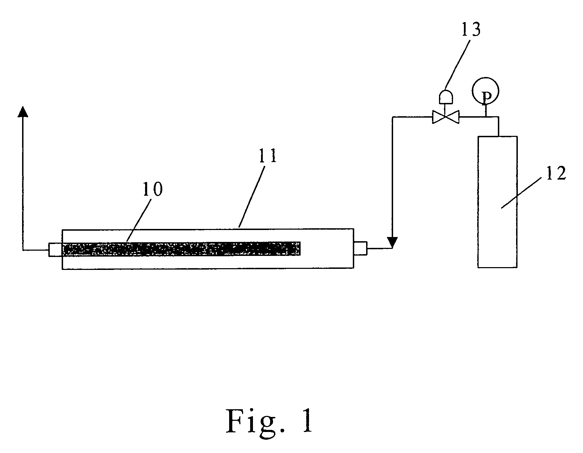

Fig. 1 is a schematic view showing the nitrogen leak test of the supported palladium membrane tube according to the present invention;
Fig. 2 shows the permeation test result for the industrial grade hydrogen (99.995 mol%) using the supported palladium membrane tube according to the present invention; and
Fig. 3 shows the permeation test result for the mixed gas including 80 mol% hydrogen and 20% carbon dioxide using the supported palladium membrane tube according to the present invention.

The porous stainless steel (PSS) support tube used in the present invention is commercially available and has an outer diameter of 9.575 to 25.4 mm (3/8 to 1 inch) and a length of 50 to 1500 mm (2 to 60 inch). The PSS support tube is connected with two pieces of standard stainless steel tubes of the same diameter at the two terminals of the PSS support tube by an orbital welding machine under argon atmosphere. Of the two standard stainless steel tubes, the shorter one (30mm) has a sealed end while the longer one (50 mm) is open ended. This extended PSS support tube is mechanically polished with abrasive papers of #400, #800, #1000 and #1200 for 10 minutes each, or polished by an ultrasonic vibration, and then briefly electro-polished. The smoothed PSS support is cleaned with 10N hydrochloric acid (HCl) for 5 minutes followed with water for 3 minutes in an ultrasonic bath at room temperature. This clean step is repeated three more times. After rinsing with distilled water, the PSS support is further cleaned with organic solvents in the following order of acetone, toluene, methyl tert-butyl ether (MTBE) and acetone for 15 minutes each in the ultrasonic bath. Thereafter, the cleaned PSS support is air-dried. The PSS support is either electroless plated with palladium salt solution after activation or is filled with hydrogen permeable fine metal powders, such as palladium, niobium or tantalum mixed with the palladium paste or high temperature epoxy resin, to fill up the pore cavities on the surface. The PSS support is then lightly polished with an abrasive paper of #1800 to smooth out the surface and to expose the metal layer for the membrane deposition onto it.

### Example 1: Preparation of the porous stainless steel support

1. PSS support: The PSS support having a length of 5 cm and a pore size of 0.2 *µ*m is purchased from Mott Corp. of USA (www.mottcorp.com).
2. Polishing:
   (1) Mechanical polishing: The surface of the PSS support is polished by abrasive papers with #150, #220, #400, #600, #800 and #1000 for 3 minutes respectively.
   (2) Electro-polishing: The PSS support is electro-polished with a power input (2.5 A and 12 V) of 30 Watt for 90 seconds.
   (3) Drying: The PSS support is dried at 100 °C for 1 hour.
   (4) Weighing
3. Acid washing at room temperature: The PSS support is acid-washed with 10N HCl in an ultrasonic bath for 5 minutes at room temperature followed with water for 3 minutes. The above step is repeated two more times.
4. Activation at 40∼60 °C (preferably 50 °C): The PSS support is immersed in 50 c.c. of distilled water for 30 seconds in an ultrasonic bath and then treated with 50 c.c. of solution A (0.1 g SnCl₂ + 0.1 c.c./L HCl) for 1 minute. Subsequently, it is washed with 50 c.c. of water for 0.5 minute, and then treated with 50 c.c. of solution B (0.1 g PdCl₂ + 0.1 c.c./L HCl) for 1 minute. The activated support is washed with 50 c.c. of water for 30 seconds in the ultrasonic bath. The above steps are repeated four more times. Thereafter, the support is placed in 50 c.c. of N₂H₄ solution (179 c.c./L N₂H₄)for 30 seconds.

### Example 2: Metal filling

1. Cleaning of metal surface: 0.2-0.4 g of fine palladium or niobium powder (purchased from Aldrich Chemicals Co. of USA) with an average diameter of 1 *µ*m is placed in 5 c.c. of phosphoric acid for 1 hour and then cleaned by 5 c.c. of water for 30 minutes in an ultrasonic bath. The above step is repeated for three more times.
2. Metal filling: The above cleaned fine palladium or niobium powder with an average diameter of 1 *µ*m is mixed with the palladium paste or with high temperature epoxy resin (300 °C CNE200ECB resin supplied from Chang Chung Plastic Co., Taiwan), and then fills up the pore cavities of the PSS support.
3. Curing: The above metal filled PSS support is cured at 550 °C under a nitrogen atmosphere including 10% hydrogen for 8 hours.
4. Polishing: The cured PSS support is mechanically polished with #1800 abrasive paper for 3 minutes and then cleaned with water for 3 minutes in the ultrasonic bath.

### Example 3: Membrane deposition by electroless plating

The above polished PSS support is placed in a plating bath at 50∼70 °C for 120∼360 minutes to deposit a palladium membrane on the PSS support by electroless plating. The plating solution is a palladium salt solution including 4.2∼5.4 g/L Pd(NH₃)₄Cl₂, 60∼74 g/L EDTA, 600∼700 g/L NH₄OH and 0.32∼0.4 c.c./L NH₂NH₂, and preferably including 4.9 g/L Pd(NH₃)₄Cl₂, 67 g/L EDTA, 653.5 g/L NH₄OH and 0.36 c.c./L NH₂NH₂. The volume of the solution should be sufficient to completely cover the whole PSS support. After the electroless plating, the palladium membrane is annealed at 450∼550 °C under a nitrogen atmosphere including 3∼10% hydrogen for 4∼8 hours. The membrane deposited by electroless plating has a thickness of 5∼25 µm (calculated from weight gain, surface area and palladium density of 12 g/cm³).

In addition, a Pd/Ag alloy membrane, instead of the Pd membrane, can also be deposited on the PSS support by electroless plating. The palladium and the silver membranes are separately deposited on the PSS support with the palladium salt solution (including 4.2∼5.4 g/L Pd(NH₃)₄Cl₂, 60∼74 g/L EDTA, 600∼700 g/L NH₄OH and 0.32∼0.4 c.c./L NH₂NH₂, and preferably including 4.9 g/L Pd(NH₃)₄Cl₂, 67 g/L EDTA, 653.5 g/L NH₄OH and 0.36 c.c./L NH₂NH₂) and the silver salt solution (including 0.2∼1 g/L AgNO₃, 60∼74 g/L EDTA, 600∼700 g/L NH₄OH and 0.32∼0.4 c.c./L NH₂NH₂, and preferably including 0.563 g/L AgNO₃, 67 g/L EDTA, 653.5 g/L NH₄OH and 0.36 c.c./L NH₂NH₂). Then the membranes are annealed at 450∼550 °C under a nitrogen atmosphere including 3∼10% hydrogen for 4∼8 hours to enable the mutual diffusion and the formation of the Pd/Ag alloy membrane.

### Example 4: Membrane deposition by DC sputtering

The above Pd or Pd/Ag membrane deposited PSS support is rinsed with distilled water and acetone sequentially. Then the tube is vacuum dried at room temperature and transferred to a DC Sputter for depositing a further Pd or Pd/Ag membrane with the corresponding targets under a vacuum of 10-³∼10⁻⁵ torr and a power input of 200∼500W at 25∼250 °C for 60∼120 minutes to reach a membrane thickness of 5∼13 *µ*m (calculated thickness). Thereafter, the membrane is annealed under a nitrogen atmosphere including 3∼10% hydrogen for 4∼8 hours. In which, the target for depositing the Pd membrane is 99∼99.9% Pd having an outer diameter of 100 mm, and the target for depositing the Pd/Ag membrane is a Pd/Ag alloy with a weight composition ratio of 77/23∼60/40 having an outer diameter of 100 mm.

### Example 5: Membrane test

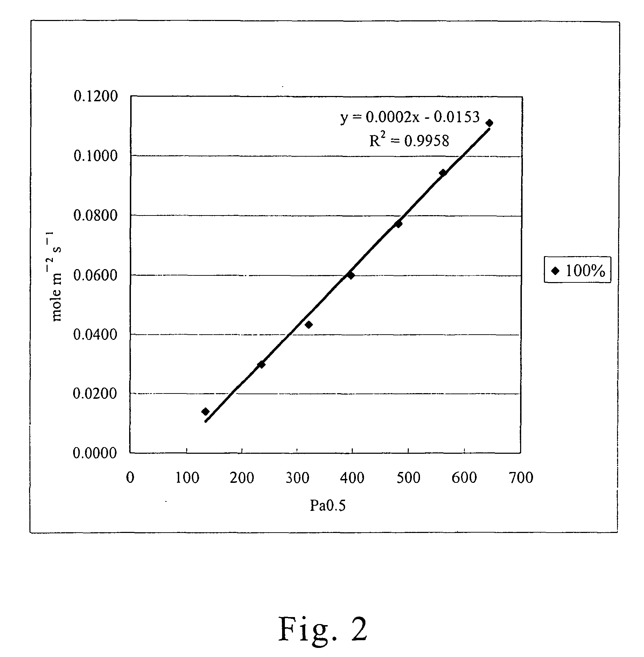

1. Leak test under nitrogen atmosphere: The opening side of the membrane tube 10 is connected to a Swadgelok fitting in a pressure chamber 11 under a water sink, as shown in Fig. The nitrogen 12 is introduced into the pressure chamber 11 with a steady pressure of 5 Bar. Thereafter, the pressure valve 13 is closed. If there is no leakage due to membrane defect or pinhole, there would be no nitrogen bubble from the inner side of membrane tube and the pressure gauge will hold steady without drop. As a result, more than 85% of the tubes made by the above method of the present invention pass this leakage test.
2. Permeation test of industrial grade hydrogen (99.995 mol%): When the membrane passes the nitrogen test, it is then tested for its hydrogen permeability with an industrial grade hydrogen of 99.995 mol% under various pressures on the shell side, P1, and the permeate site or the tube side, P2, is maintained at 1 atm. The hydrogen permeates have purity over 99.9999% (no detectable impurity by GC with TCD or FID equipped with an online methanizer). The result is shown in Table 1. By plotting the hydrogen flux versus [(P₁)^{½} - (P₂)^{½}], as shown in Fig. 2, the permeability P = 2×10⁻⁴ mol/(M²-s-Pa^{½}) is calculated from the slop.

**Table 1**

| Pressure (atm) | 2 | 3 | 4 | 5 | 6.25 | 7.56 | 9 |
|---|---|---|---|---|---|---|---|
| Hydrogen Flux (mole-m⁻²s⁻¹) | 0.0139 | 0.0299 | 0.0435 | 0.0601 | 0.0773 | 0.0942 | 0.1112 |

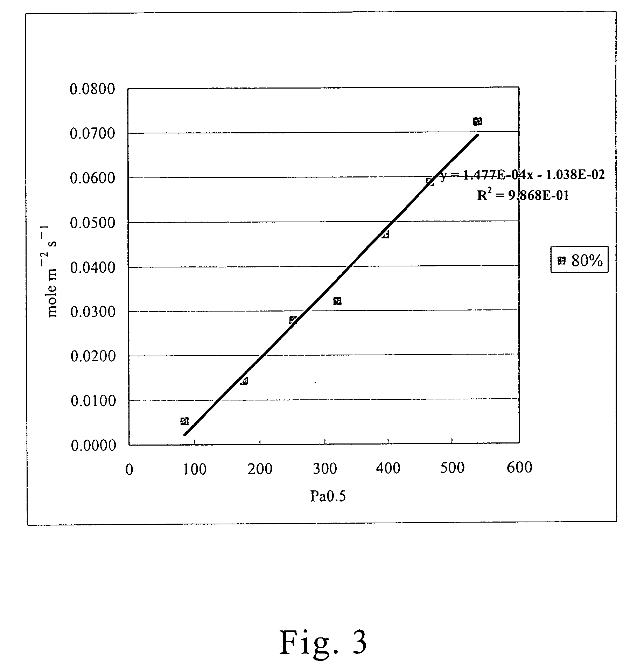

3. Permeation test of 80 mol% hydrogen with 20% carbon dioxide: A mixture of hydrogen (80 mol%) and CO₂ (20 mol%) is purchased from an industrial gas company (San Fu Chemical Co.). This feed is characterized with a gas chromatograph (Shimadzu-GC14B) equipped with an online methanizer to convert CO₂ into CH₄ for FID analysis to a sensitivity of 1.0 ppm. The mixture is then used to measure the hydrogen flux under various shell side pressures, P1. The hydrogen permeability of the mixture is shown in Table 2. The hydrogen permeability is calculated from the plot of the hydrogen flux versus [(0.8P₁)^{½} - (P₂ = 1) ^{½}], as shown in Fig. 3.

**Table 2**

| Pressure (atm) | 2 | 3 | 4 | 5 | 6.25 | 7.56 | 9 |
|---|---|---|---|---|---|---|---|
| Hydrogen Flux (mole-m⁻²s⁻¹) | 0.0053 | 0.0143 | 0.0279 | 0.0322 | 0.0471 | 0.0587 | 0.0723 |

The hydrogen purity in the permeate is increased from 80 mol% to above 99.98 mol%.

In conclusion, the method for forming the supported Pd or Pd/Ag membrane provided in the present invention demonstrates the capability of making the supported Pd or Pd/Ag membrane to purify a crude hydrogen stream to a high purity with industrial grade hydrogen through the membrane. Therefore, the present invention possesses the industrial value.

## Claims

1. A method for forming a supported palladium membrane used for hydrogen purification and production, comprising steps of:
providing a support;
filling the support with a metal;
electroless plating a palladium membrane on the support with a palladium salt solution; and
DC sputtering an additional palladium membrane further on the support.

2. The method according to claim 1 **characterized in that** the support is a porous stainless steel support.

3. The method according to claim 2 **characterized in that** the porous stainless steel support is prepared by steps of:
mechanically polishing the support by one of an abrasive paper and an ultrasonic vibration;
electro-polishing the support;
acid-washing the support with 8∼10 N HCl; and
activating the support at 40∼60 °C.

4. The method according to claim 1 **characterized in that** the metal is one selected from a group consisting of palladium, niobium, tantalum and a combination thereof.

5. The method according to claim 1 **characterized in that** the metal is a hydrogen permeable fine metal powder.

6. The method according to claim 5 **characterized in that** the metal powder is mixed with one of a palladium paste and a high temperature epoxy resin.

7. The method according to claim 1 **characterized by** comprising a step of polishing the support after the metal filling step.

8. The method according to claim 7 **characterized in that** the polishing step is performed by an abrasive paper.

9. The method according to claim 1 **characterized in that** the palladium salt solution contains 4.2-5.4 g/L Pd(NH₃)₄Cl₂, 60-74 g/L EDTA, 600-700 g/L NH₄OH and 0.32-0.4 c.c./L NH₂NH₂.

10. The method according to claim 1 **characterized in that** the electroless plating is performed for 120-360 minutes.

11. The method according to claim 1 **characterized in that** the electroless plating is performed at 50-70 °C.

12. The method according to claim 1 **characterized in that** a target of the DC sputtering is 99-99.9% palladium.

13. The method according to claim 1 **characterized in that** the DC sputtering is performed under a vacuum pressure of 10⁻² ∼10⁻⁵ torr and a power input of 200∼500 W at 25∼250 °C.

14. The method according to claim 1 **characterized in that** the DC sputtering is performed for 60∼120 minutes.

15. The method according to claim 1 **characterized in that** the palladium membrane has a thickness of 3∼30 *µ*m after the DC sputtering.

16. The method according to claim 1 **characterized by** comprising a step of annealing the palladium membrane at 450∼550 °C under a nitrogen atmosphere including 3∼10% hydrogen for 4∼8 hours.

17. A method for forming a supported palladium membrane used for hydrogen purification and production, comprising steps of:
providing a support;
filling the support with a metal; and
electroless plating a palladium membrane on the support with a palladium salt solution.

18. A method for forming a supported Pd/Ag membrane used for hydrogen purification and production, comprising steps of:
providing a support;
filling the support with a metal;
electroless plating a palladium membrane on the support with a palladium salt solution;
electroless plating a silver membrane on the support with a silver salt solution;
annealing the palladium membrane and the silver membrane to form a Pd/Ag membrane; and
DC sputtering an additional Pd/Ag membrane further on the support.

19. The method according to claim 18 **characterized in that** the support is a porous stainless steel support.

20. The method according to claim 19 **characterized in that** the porous stainless steel support is prepared by the steps of:
mechanically polishing the support by one of an abrasive paper and an ultrasonic vibration;
electro-polishing the support;
acid-washing the support with 8∼10 N HCl; and
activating the support at 40∼60 °C.

21. The method according to claim 18 **characterized in that** the metal is one selected from a group consisting of palladium, niobium, tantalum and a combination thereof.

22. The method according to claim 18 **characterized in that** the metal is a hydrogen permeable fine metal powder.

23. The method according to claim 22 **characterized in that** the metal powder is mixed with one of a palladium paste and a high temperature epoxy resin.

24. The method according to claim 18 **characterized by** comprising a step of polishing the support after the metal filling step.

25. The method according to claim 24 **characterized in that** the polishing step is performed by an abrasive paper.

26. The method according to claim 18 **characterized in that** the palladium salt solution contains 4.2∼5.4 g/L Pd(NH₃)₄Cl₂, 60∼74 g/L EDTA, 600∼700 g/L NH₄OH and 0.32∼0.4 c.c./L NH₂NH₂.

27. The method according to claim 18 **characterized in that** the silver salt solution contains 0.2∼1 g/L AgNO₃, 60∼74 g/L EDTA, 600∼700 g/L NH₄OH and 0.32∼0.4 c.c./L NH₂NH₂.

28. The method according to claim 18 **characterized in that** the electroless plating is performed at 50∼70 °C.

29. The method according to claim 18 **characterized in that** a target of the DC sputtering is a Pd/Ag alloy with a weight composition ratio of 77/23∼60/40.

30. The method according to claim 18 **characterized in that** the DC sputtering is performed under a vacuum pressure of 10⁻²∼10⁻⁵ torr and a power input of 200∼500 W at 25∼250 °C.

31. The method according to claim 18 **characterized in that** the step of annealing the palladium membrane and the silver membrane is performed at 450∼550 °C under a nitrogen atmosphere including 3∼10% hydrogen for 4∼8 hours.

32. The method according to claim 18 **characterized in that** the palladium membrane has a thickness of 3∼30 *µ*m after the DC sputtering.

33. A method for forming a supported Pd/Ag membrane used for hydrogen purification and production, comprising steps of:
providing a support;
filling the support with a metal;
electroless plating a palladium membrane on the support with a palladium salt solution;
electroless plating a silver membrane on the support with a silver salt solution; and
annealing the palladium membrane and the silver membrane to form a Pd/Ag membrane.
